# EUROPEAN PATENT SPECIFICATION

(11) **EP 0 283 958 B1**
(45) Date of publication and mention of the grant of the patent: **11.09.1996**
(21) Application number: 88104376.4
(22) Date of filing: 18.03.1988
(51) Int. Cl.: C08F 10/14, C08F 4/60

(54) **Olefin polymer and process for production thereof**
Olefinpolymere und Verfahren zu deren Herstellung
Polymères oléfiniques et leur procédé de préparation

(30) Priority: 19.03.1987 JP 66650/87; 19.03.1987 JP 66651/87
(43) Date of publication of application: 28.09.1988
(73) Proprietor: IDEMITSU KOSAN COMPANY LIMITED, Tokyo 100 (JP)
(72) Inventor: Kuramoto, Masahiko Idemitsu Kosan Company Ltd., Kimitsu-gun chiba-ken (JP); Abe, Masakazu Idemitsu Kosan Company Ltd., Kimitsu-gun chiba-ken (JP); Watanabe, Masami Idemitsu Kosan Company Ltd., Kimitsu-gun chiba-ken (JP); Uoi, Michitake Idemitsu Kosan Company Ltd., Kimitsu-gun chiba-ken (JP)
(74) Representative: TER MEER - MÜLLER - STEINMEISTER & PARTNER

(56) References cited:
- EP-A- 0 268 214
- DE-A- 1 904 356
- GB-A- 903 014
- GB-A- 2 027 730
- US-A- 4 658 078

## Description

### FIELD OF THE INVENTION

The present invention relates to an olefin polymer and a process for producing the same. More particularly, it relates to a novel olefin polymer which can be used for films, sheets, filaments, daily goods and other industrial materials and a process for producing it.

### BACKGROUND OF THE INVENTION

In general, olefin polymers are superior in processability, mechanical characteristics and electrical characteristics and besides they are inexpensive. For these reasons, polymers of various structures have been developed and uses thereof are increasing steadily.

However, at present, the properties required for olefin polymers have become diversified with increase of uses. Thus, the development of polmyers suitable for respective application fields has been demanded. Especially in the fields of lubricants and adhesives development of novel polymers has been demanded which are superior to conventional polyolefins in elasticity or adhesion and which have wide application ranges and can be set widely on characteristics from flexible ones to rigid ones.

GB-A-2 027 730 relates to an electret comprising an electrostatically polarized resinous polymer of an α-olefin having a branched side chain, said polymer being composed of repeating units having the structure 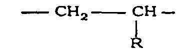 wherein R is a branched alkyl radical having from 3 to 10 carbon atoms, said polymer having a crystallinity of at least 20% by weight.

GB-A-903 014 discloses a process for the production of high molecular weight polymers which comprises polymerizing propylene in contact with a laminar complex containing or consisting of an alkali metall and carbon, thereafter polymerizing the product or a C₆ fraction of the product or a specific dimer or mixture of dimers of propylene derived from the product in the presence of a catalyst, whereby high molecular weight polymers are produced. This known process comprises the polymerization of propylene under conditions favouring the formation of 4-methylpentene-1, i.e. a propylene dimer.

### SUMMARY OF THE INVENTION

The object of the present invention is to provide a novel olefin polymer which can be adjusted in its characteristics from flexible to rigid ones and can be suitably used in a wide variety of fields such as of films, sheets, filaments, daily goods and other industrial materials and a process for producing such a novel olefin polymer.

### DESCRIPTION OF THE INVENTION

As a result of the inventor's intensive research in an attempt to attain the above object, it has been found that a polymer having a specific recurring unit has a wide variety of uses and that such a polymer can be produced using a specific monomer and a specific catalyst. The present invention is based on this finding.

That is, the first embodiment of the invention is an olefin polymer which has the recurring unit represented by the following formula [1]: 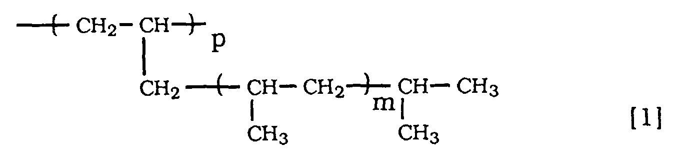 wherein p represents an integer of 2 or more and m represents an integer of at least 1.

The second embodiment of the invention is a process for producing an olefin polymer which comprises polymerizing an olefinic hydrocarbon represented by the following formula (2] 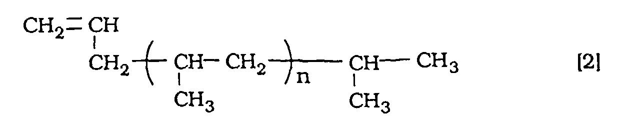 wherein n indicates an integer of at least 1,
in the presence of a catalyst mainly composed of a transition metal compound and an organometallic compound of Groups I-V of the periodic table.

The third embodiment ofthe invention is an olefin copolymer having a recurring unit represented by the following formula [3] 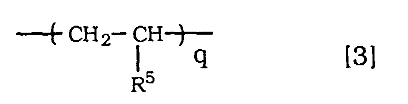 wherein R⁵ represents hydrogen atom or an alkyl group of 1-9 carbon atoms and the recurring unit
represented by the following formula [1] 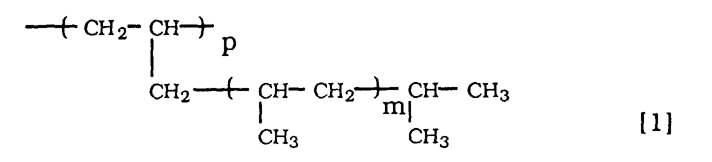 wherein the sum of p + q is a number of 5 or more and m represents an integer of at least 1.

The fourth embodiment of the invention is a process for producing an olefin copolymer which comprises polymerizing an olefinic hydrocarbon represented by the following formula [4];

CH₂ = CH - R⁵ [4]

(wherein R⁵ represents a hydrogen atom or an alkyl group of 1-9 carbon atoms) and an olefinic hydrocarbon represented by the formula [2]: 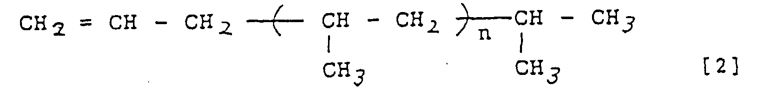 (wherein n indicates an integer of at least 1) in the presence of a catalyst mainly composed of a transition metal compound and an organometallic compound of Groups I-V of the periodic table.

In the above first and third embodiments of the invention, the recurring unit represented by the formula [1] can be derived from the olefinic hydrocarbon represented by the formula [2].

The recurring unit represented by the formula [3] in the third embodiment of the invention can be derived from the olefinic hydrocarbon represented by the formula [4].

As the olefinic hydrocarbon represented by the formula [4], mention may be made of those which have a hydrogen atom or an alkyl group of 1-9 carbon atoms as R⁵. Typical examples of the alkyl groups are ethylene, propylene, butene-1, pentene-1, 3-methyl-butene-1, hexene-1,4-methylpentene-1 and octene-1.

These hydrocarbons may be used alone or in combination of two or more.

The olefinic hydrocarbon represented by the formula [2] and having a vinyl group at terminal of molecule can be obtained, for example, by separating the dimer and the higher products from a mixture of propylene oligomers obtained by polymerization of propylene in the presence of a catalyst comprising a condensation product of an organoaluminum compound and water and an alkyl substituted cyclopentadienyl compound such as bis(pentamethylcyclopentadienyl)hafnium dichloride, or bis(pentamethylcyclopentadienyl)zirconium dichloride.

Said organoaluminum compounds have no special limitation and those represented by the following general formulas are widely used.

AlR¹ ₃

AlR² ₂ Y

Al₂R³ ₃Y₃

(wherein R¹, R² and R³ each represents a cycloalkyl group, an aryl group or an alkyl group of 1-10, preferably 1-5 carbon atoms and Y represents a hydrogen atom, a halogen atom such as chlorine atom or bromine atom, or an alkoxy group such as methoxy group or ethoxy group.

As the organoaluminum compounds represented by the above general formulas, mention may be made of, for example, trialkylaluminum such as, for example, trimethylaluminum, triethylaluminum, tripropylaluminum, triisopropylaluminum, tributylaluminum, triisobutylaluminum, triamylaluminum and trioctylaluminum, dialkylaluminum monohalides such as, diethylaluminum monochloride, diisopropylaluminum monochloride, diisobutylaluminum monochloride and dioctylaluminum monochloride, ethylaluminum sesquichloride, diethylaluminum hydride, dimethylaluminum ethoxide and diethylaluminum methoxide.

These organoaluminum compounds may be used alone or in combination of two or more, with the proviso that at least one trialkylaluminum is contained.

Among the above organoaluminum compounds, a trialkylaluminum represented by the general formula: AlR⁴₃ (wherein R⁴ represents an alkyl group of 1-5 carbon atoms) is preferred and especially preferred are trimethylaluminum and triethylaluminum.

Water to be reacted with the above organoaluminum compounds is not critical and may contain some impurities as far as they do not interfere with the formation of the reaction product, namely, aluminoxane. Moreover, for example, crystal water in hydrous salts may also be used in addition to water to be directly reacted with the organoaluminum compound.

As aluminoxanes obtained by the condensation of the alkylaluminum compound and water, mention may be made of, for example, methylaluminoxane, ethylaluminoxane, propylaluminoxane, isopropylaluminoxane, butylaluminoxane, isobutylaluminoxane and amylaluminoxane.

The above condensation products of the organoaluminum compound and water have no limitations in molecular weight and process of preparation. For example, the organoaluminum compound and water may be condensed in the oligomerization zone or they may be reacted before introduction into the oligomerization zone. Moreover, the resulting condensation product may be carried on a solid carrier or other organoaluminum compounds may be present together with the condensation product.

The above mentioned alkyl substituted cyclopentadienyl compound (sometimes referred to as "cyclopentadienyl compound" hereinafter) can be represented by the following formula [5]:

[Rₜ(C₅H₅₋ₜ)]ₛ · M · X₄₋ₛ [5]

(wherein R represents an alkyl group of 1-20 carbon atoms and R_{*t*}(C₅H₅₋_{*t*}) represents an alkyl substituted cyclopentadienyl group, t represents an integer of 1-5, M represents a zirconium atom or hafnium atom, X represents a hydrogen atom, an alkyl group of 1-20 carbon atoms or a halogen atom and s represents a real number of 1-4).

The alkyl group represented by R or X in the above formula [5] contains 1-20 carbon atoms and as examples thereof, mention may be made of methyl, ethyl, propyl, isopropyl, butyl, isobutyl, amyl, hexyl, heptyl, octyl, nonyl, capryl, undecyl, lauryl, tridecyl, myristyl, pentadecyl, cetyl, heptadecyl, stearyl, nonadecyl and eicosyl groups.

The halogen atom represented by X in the above formula [5] is not critical, but is preferably chlorine.

The blending ratio at the reaction of the cyclopentadienyl compound and the condensate of the organoaluminum compound and water is preferably such that aluminum atom/zirconium atom or hafnium atom is 10-5,000.

As the propylene used for the preparation of the olefinic hydrocarbon of the formula [2], there may be used, for example, those obtained by fractional distillation of cracking gas of petroleum and natural gas.

With reference to the oligomerization reaction of said propylene, the reaction temperature is not critical and ordinarily is 20-80°C and the reaction can be effected under optional pressures, for example, a low pressure of lower than 0.98 MPa·G (10 kg/cm²G) or, if necessary, under normal pressure.

Solvents may be used in the oligomerization reaction of propylene.

As examples of the solvents, mention may be made of aromatic hydrocarbons such as, for example, benzene, toluene, xylene, ethylbenzene, cumene, mesitylene, naphthalene, tetralin, butylbenzene, p-cymene, cyclohexylbenzene, diethylbenzene, pentylbenzene, dipentylbenzene, dodecylbenzene and biphenyl; aliphatic hydrocarbons such as, for example, 2-methylbutane, hexane, 2-methylpentane, 2,2-dimethylbutane, 2,3-dimethylbutane, heptane, octane, 2,2,3-trimethylpentane, isooctane, nonane, 2,2,5-trimethylhexane, decane and dodecane; cyclohexane, decalin, petroleum ether, petroleum benzine, petroleum naphtha, ligroin, industrial gasoline and kerosine.

The polymerization may be carried out by any of solution polymerization method, bulk polymerization method or vapor phase polymerization method.

The solution polymerization is preferred from the point of catalytic activity.

The olefinic hydrocarbon represented by the formula [2] can be obtained by separating the dimer and the higher polymers from the thus obtained mixture of propylene oligomers.

In the second embodiment of the invention, the olefin polymer represented by the formula [1] can be produced by polymerizing the above olefinic hydrocarbon represented by the formula [2] in the presence of a catalyst mainly composed of a transition metal compound and an organometallic compound belonging to Groups I-V of the periodic table. In the fourth embodiment of the invention, the olefin polymer according to the third embodiment of the invention can be produced by polymerizing the olefinic hydrocarbon represented by the formula [2] and the olefinic hydrocarbon represented by the formula [4] in the presence of a catalyst mainly composed of a transition metal compound and an organometallic compound belonging to Groups I-V of the periodic table.

As the transition metal compounds, there may be used those conventionally used for Ziegler-Natta catalyst. As examples thereof, mention may be made of titanium compounds such as titanium trichloride and titanium tetrachloride; nickel compounds such as nickel chloride; zirconium compounds such as zirconium tetrachloride, zirconium trichloride and zirconium oxychloride; hafnium compounds; vanadium compounds such as vanadium trichloride, vanadium tetrachloride and vanadium oxychloride; niobium compounds such as niobium pentachloride and niobium oxychloride; and molybdenum compounds such as molybdenum chloride and molybdenum pentachloride.

These may be used alone or in combination of two or more.

Of these compounds, preferred are titanium compounds such as titanium trichloride and titanium tetrachloride.

As the organometallic compounds, there may be used compounds of metals belonging to Groups I-V of the periodic table such as, for example, Li, Na, K, Rb, Cs, Be, Mg, Zn, Cd, Hg, Al, Ge, Sn, Pb, Ti, Zr, Hf and V.

As the compounds of metals belonging to Group I-V of the periodic table, mention may be made of those which have been conventionally used as Ziegler-Natta catalysts such as, for example, alkyl sodium, alkyl lithium, alkyl potassium, alkyl lithium aluminum, dialkyl beryllium, dialkyl magnesium, dialkyl zinc, dialkyl cadmium, dialkyl mercury, tetraalkyl germanium, tetraalkyl tin, tetraalkyl lead, methyl titanium trihalide, phenyltrialkoxy titanium and organoaluminum compounds. Among them, organoaluminum compounds are especially preferred.

As said organoaluminum compounds, those which are used in the preparation of said olefinic hydrocarbon can be used, among which preferred are triethylaluminum and diethylaluminum monochloride.

These organometallic compounds may be used alone or in combination of two or more.

The preparation of the polymerization catalyst is carried out by adding said transition metal compound and said organometallic compound to the solvent used in the preparation of said, olefinic hydrocarbon or the olefinic hydrocarbon, and contacting them.

The mixing molar ratio of the transition metal compound and the organometallic compound is 1 : 1 ∼ 1 : 1000, preferably 1 : 5 ∼ 1 : 500 in terms of metal.

As the polymerization catalyst, besides those obtained from said transition metal compound and said organometallic compound, there may be used highly active catalysts comprising said catalyst components carried on a magnesium compound.

Magnesium compounds as carrier include, for example, MgO, MgCl₂, Mg(OR)Cl, Mg(OR)₂, Mg(OH)Cl, Mg(OH)₂, MgR₂ and Mg(OCOR)₂ [wherein R is an alkyl group].

The highly active catalyst may be prepared by reacting said magnesium compound with said transition metal compound, for example, by a copulverization method or slurry method.

In this case, there may be added an electron donating substance such as ether, ester, ketone or amine.

In said polymerization reaction, the reaction temperature is ordinarily 20-200°C and the reaction pressure is ordinarily from normal pressure to 4.9 MPa·G (50 kg/cm²·G). When the reaction temperature is lower than 20°C, the reaction of the present invention may not proceed sufficiently. On the other hand, when it is higher than 200°C, the catalytic activity may decrease. When the reaction pressure is higher than 4.9 MPa·G (50 kg/cm²·G), the catalytic activity may also decrease.

The polymerization may be carried out by any of slurry polymerization, solution polymerization, bulk polymerization or vapor phase polymerization, but slurry polymerization and solution polymerization are preferred from the point of catalytic activity. The polymerization degree of the olefin polymer according to the first embodiment of the invention is not critical as far as it is 2 or more and a low molecular weight polymer can be prepared as a liquid polymer and a high molecular weight polymer can be prepared as an adherent and flexible solid polymer or elastomer by the process according to the second embodiment of the invention.

The olefin polymer according to the first embodiment of the invention is a novel polymer superior in elasticity and adhesion and can be suitably utilized as lubricants, adhesives, heat sealing agents, resin modifiers.

The polymerization degree of the olefin copolymers according to the third embodiment of the invention is 5 or more and such copolymers can be prepared as those of desired poperties from flexible rigid ones by the process according to the fourth embodiment of the invention. When the polymerization degree is less than 5, polymers for attaining the object of the present invention may not be obtained. The olefin copolymers according to the third embodiment of the invention are novel polymers excellent in general-puropse properties of wide ranges of from flexible to rigid ones and can suitably be utilized as films, sheets, filaments, daily goods and other industrial materials.

According to the first embodiment of the invention, olefin polymers superior especially in elasticity and adhesion and high in industrial usefulness can be provided.

According to the second embodiment of the invention, a novel process for the production of novel olefin polymers superior especially in elasticity and adhesion and high in industrial usefulness can be provided.

According to the third embodiment of the invention, novel olefin copolymers can be provided which can be set on their properties in a wide range of from flexible to rigid ones and which have high industrial usefulness.

According to the fourth embodiment of the invention, a novel process for the production of novel olefin copolymers which can be set in their properties in a wide range of from flexible to rigid ones and which are high in industrial usefulness can be provided.

### Examples

The present invention will be explained in more detail by the following examples.

### Synthesis of olefinic hydrocarbon

200 ml of toluene, 47.4 ml (492 mmols) of trimethylaluminum and 35.5 g (142 mmols) of copper (II) sulfate pentahydrate were charged in a reaction vessel and were reacted under an argon stream and at 20°C for 24 hours.

Copper (II) sulfate was removed from the resulting product by filtration and toluene was distilled out to obtain 12.4 g of methylaluminoxane. This aluminoxanes had a molecular weight of 721 measured by cryoscopic method.

Then, 400 ml of toluene, 6 mmols (aluminum equivalent) of the above methylaluminoxane and 0.01 mmol of bis(pentamethylcyclopentadienyl)hafnium dichloride were charged in an autoclave of 1 liter in internal volume and heated to 50°C.

Thereafter, hydrogen was introduced so as to reach 0.098 MPa·G (1 kg/cm²·G) and then propylene was continuously introduced thereinto and reaction was effected at 50°C for 4 hours with maintaining a propylene partial pressure of 0.78 MPa·G (8 kg/cm²).

After completion of the reaction, the product was washed with 150 ml of 3N aqueous hydrochloric acid solution to obtain 181.7 g of propylene oligomer.

The thus obtained propylene oligomer was distilled to separate into five components of a dimer fraction (boiling point: 53.9°C) comprising 4-methylpentene-1 of 99% or more in purity, a trimer fraction (boiling point: 129°C) comprising 4,6-dimethyl-heptene-1, a tetramer fraction (boiling point: 189°C) comprising 4,6,8-trimethyl-nonene-1, a pentamer (boiling point: 230°C) comprising 4,6,8,10-tetramethyl-undecene-1 and a fraction of hexamer or higher polymers.

### Example 1

### (1) Preparation of catalyst component

100 ml of dry n-heptane and 2.0 g (18 mmols) of magnesium diethoxide were charged in a 200 ml three-necked flask and were stirred.

Then, 0.53 g (3.5 mmols) of ethyl benzoate was added thereto at room temperature and further, 34 g (180 mmol) of titanium tetrachloride was added dropwise thereto and thereafter, reaction was effected for 3 hours under reflux.

After completion of the reaction, the product was repeatedly washed by decantation with n-heptane to obtain a solid catalyst component.

The amount of titanium carried in the resulting solid catalyst was measured by colorimetry to obtain 40 mg-Ti/g-carrier.

### (2) Production of olefin polymer

In a reaction vessel of 500 ml in internal volume were charged 100 ml of n-heptane, 2.5 mmols of triethylaluminum, 2.5 mmols of diethylaluminum monochloride and 1 mmol (in terms of Ti atom) of the solid catalyst component obtained in the above (1).

Then, thereto was added 10 ml of the trimer fraction comprising 4,6-dimethyl-heptene-1 obtained in the above synthesis of olefinic hydrocarbon monomer and reaction was effected at 50°C for 2 hours.

After completion of the reaction, the product was washed with a mixed solution of hydrochloric acid and methanol to decompose the catalyst and remove it and the residue was dried to obtain a polymer (yield: 94.9%).

The weight-average molecular weight of the thus obtained polymer was measured by gel permeation chromatography (GPC method) to obtain 79200.

Further, this polymer was subjected to ¹³C-NMR analysis to find absorptions with methyl group in the following formula at (a) 20.4 ppm, (b) 22.6 ppm and (c) 23.1 ppm, absorptions with methine group at (d) 25.5 ppm, (e) 28.3 ppm and (f) 30.7 ppm and absorptions with methylene group at (g) 41.8 ppm, (h) 44.0 ppm and (i) 48.5 ppm.

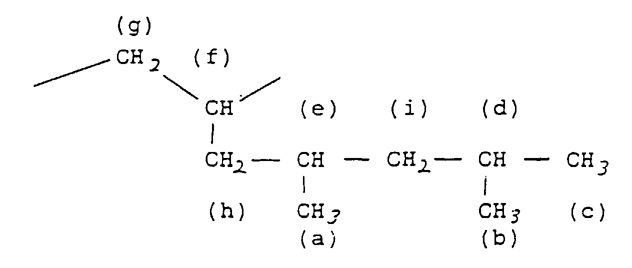

### Example 2

Example 1 was repeated except that the amounts of triethylaluminum, diethylaluminum monochloride and the solid catalyst component in (2) of Example 1 were 1.25 mmol, 1.25 mmol and 0.5 mmol (in terms of Ti atom), respectively.

The resulting polymer was a liquid polymer having adhesive property and a weight-average molecular weight of 66000. Yield was 79.8%.

### Example 3

Example 1 was repeated except that 1 mmol of titanium trichloride and 2 mmols of diethylaluminum monochloride were used in place of 2.5 mmols of triethylaluminum, 2.5 mmols of diethylaluminum monochloride and 1 mmol of solid catalyst component in (2) of Example 1.

The resulting polymer was a flexible solid having a weight-average molecular weight of 108000 and yield was 59.8%.

### Example 4

Example 1 was repeated except that a tetramer fraction comprising 4,6,8-trimethyl-nonene-1 obtained in synthesis of the olefinic hydrocarbon monomer was used in place of the propylene trimer fraction comprising 4,6-dimethyl-heptene-1 in (2) of Example 1.

The resulting polymer was a liquid polymer having adhesive property and a weight-average molecular weight of 35700 and yield was 82.5%.

This polymer was subjected to ¹³C-NMR analysis to recognize absorptions with methyl group in the following formula at (a) 20.2 ppm, (b) 20.7 ppm, (c) 22.6 ppm and (d) 23.2 ppm, absorptions with methine group at (e) 25.5 ppm, (f) 28.5 ppm, (g) 28.5 ppm and (h) 30.6 ppm and absorptions with methylene group at 41.4 ppm, (j) 44.6 ppm, (k) 47.3 ppm and (1) 48.1 ppm.

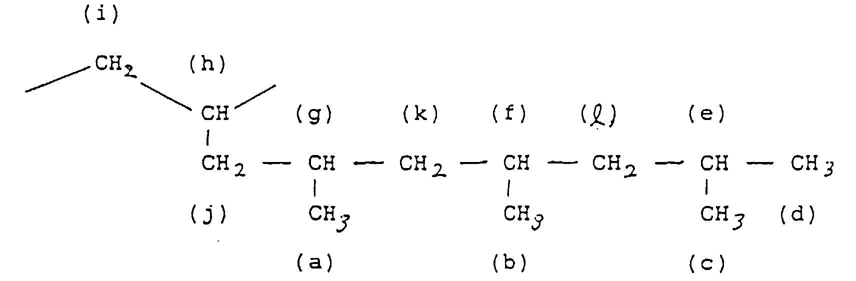

### Example 5

Example 4 was repeated except that 1 mmol of titanium trichloride and 2 mmols of diethylaluminum monochloride were used in place of 2.5 mmols of triethylaluminum, 2.5 mmols of diethylaluminum monochloride and 1 mmol of solid catalyst component.

The resulting polymer was a liquid polymer having adhesive property and a weight-average molecular weight of 44200 and yield was 31.8%.

### Example 6

Example 1 was repeated except that a propylene pentamer fraction comprising 4,6,8,10-tetramethyl-undecene-1 obtained in the synthesis of the olefinic hydrocarbon monomer was used in place of the propylene trimer fraction comprising 4,6-dimethyl-heptene-1 in (2) of Example 1.

The resulting polymer was a liquid polymer having adhesive property and a weight-average molecular weight of 33900 and yield was 68.4%.

This polymer was subjected to ¹³C-NMR analysis to recognize absorptions with methyl group in the following formula at (a) 19.8 ppm, (b) 20.1 ppm, (c) 20.5 ppm, (d) 22.5 ppm and (e) 23.1 ppm, absorptions with methine group at (f) 26.1 ppm, (g) 28.3 ppm, (h) 28.3 ppm, (i) 28.3 ppm and (j) 30.6 ppm and absorptions with methylene group at (k) 41.9 ppm, (1) 44.7 ppm, (m) 47.3 ppm, (n) 47.3 ppm and (o) 48.0 ppm.

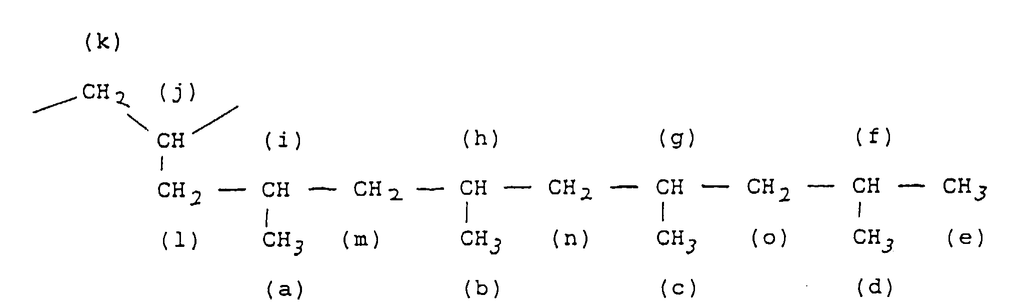

### Example 7

Example 6 was repeated except that 50°C of the polymerization temperature was changed to 20°C and 2 hours of the polymerization time was changed to 8 hours.

The resulting polymer had a weight-average molecular weight of 45000 and yield was 73.4%.

### Example 8

Example 1 was repeated except that a mixture of 50 mol% of the propylene trimer fraction comprising 4,6-dimethyl-heptene-1 and 50 mol% of propylene tetramer fraction comprising 4,6,8-trimethyl-nonene-1 was used in place of the propylene trimer fraction comprising 4,6-dimethyl-heptene-1 in (2) of Example 1.

The resulting polymer was a liquid polymer having adhesive property and a weight-average molecular weight of 22300-and yield was 65.1%.

### Example 9

Example 8 was repeated except that 50°C of the polymerization temperature was changed to 20°C and 2 hours of the polymerization time was changed to 8 hours.

The resulting polymer was a flexible solid having a weight-average molecular weight of 56700 and yield was 62.5%.

### Example 10

Example 9 was repeated except that a mixture of 50 mol% of the propylene tetramer fraction and 50 mol% of the propylene pentamer fraction comprising 4,6,8,10-tetramethyl-undecene-1 was used in place of the mixture of 50 mol% of the propylene trimer fraction and 50 mol% of the propylene tetramer fraction comprising 4,6,8-trimethyl-nonene-1.

The resulting polymer was a liquid polymer having adhesive property and having a weight-average molecular weight of 50300 and yield was 72.3%.

### Example 11

Example 8 was repeated except that a mixture of 50 mol% of propylene trimer fraction comprising 4,6-dimethyl-heptene-1 and 50 mol% of oligomers of hexamer and higher was used in place of the mixture of 50 mol% of the propylene trimer fraction comprising 4,6-dimethyl-heptene-1 and 50 mol% of the propylene tetramer comprising 4,6,8-trimethyl-nonene-1.

The resulting polymer was a liquid polymer having adhesive property and having a weight-average molecular weight of 15900 and yield was 32.5%.

### Example 12

Example 1 was repeated except that a mixture of equal amounts of propylene trimer fraction comprising 4,6-dimethyl-heptene, propylene tetramer fraction comprising 4,6,8-trimethyl-nonene-1, propylene pentamer fraction comprising 4,6,8,10-tetramethyl-undecene-1 and oligomers of hexamer and higher was used in place of the propylene trimer fraction comprising 4,6-dimethyl-heptene-1 and that 2 hours of the polymerization time was changed to 3 hours.

The resulting polymer was a liquid polymer having adhesive property and having a weight-average molecular weight of 38400 and yield was 67.7%.

### Example 13

### (2) Production of olefin polymer

In a reaction vessel of 1 liter in internal volume were charged 400 ml of n-heptane, 2.5 mmols of triethylaluminum, 2.5 mmols of diethylaluminum monochloride and 1 mmol (in terms of Ti atom) of the solid catalyst component obtained in the above (1) of Example 1.

Then, thereto was added 100 ml of the tetramer fraction comprising 4,6,8-trimethyl-nonene-1 obtained in the above synthesis of olefinic hydrocarbon monomer and copolymerization reaction was effected at 50°C for 2 hours with continuous introduction of ethylene and keeping the total pressure at 0.196 MPa·G (2 kg/cm²·G).

After completion of the reaction, the product was washed with a mixed solution of hydrochloric acid and methanol to decompose the catalyst and remove it and the residue was dried to obtain 26.5 g of a copolymer (yield: 94.9%).

The weight-average molecular weight of the thus obtained copolymer was measured by gel permeation chromatography (GPC method) to obtain 212,000. Density was 0.9236 g/cm³.

Further, this copolymer was subjected to ¹³C-NMR analysis to find absorptions with methyl group in the following formula [6] at (a) 20.2 ppm, (b) 20.7 ppm and (c) 22.6 ppm and (d) 23.2 ppm, absorptions with methine group at (e) 25.5 ppm, (f) 28.5 ppm, (g) 28.5 ppm and (h) 30.6 ppm and absorptions with methylene group at (i) 41.9 ppm, (j) 44.6 ppm, (k) 47.3 ppm and (1) 48.1 ppm. The content of the recurring unit represented by the formula [6] was 1 mol%.

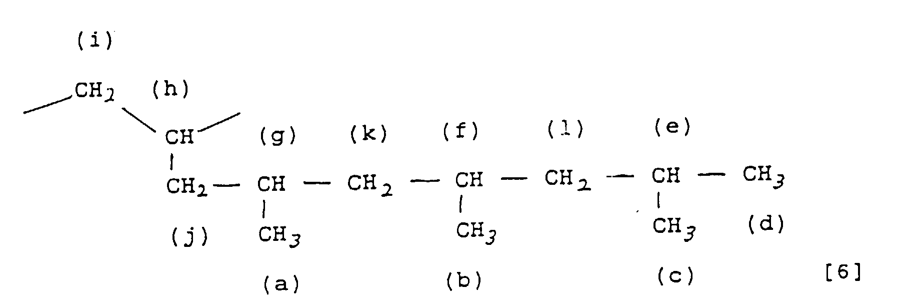

The melting point of this copolymer was 123°C. This was lower than the melting point of polyethylene, 134°C and it is supposed that the recurring unit represented by the formula [6] was randomly introduced in such a manner to disorder the crystal of polyethylene.

### Example 14

Example 13 was repeated except that propylene was introduced so as to attain a total pressure of 0.49 MPa·G (5 kg/cm²·G) in place of ethylene. The yield of the resulting copolymer was 83.9 g.

Further, the copolymer was subjected to Soxhlet extraction with n-heptane as a solvent to obtain a copolymer as an extraction residue (yield: 92.8%). This extraction residue copolymer had a weight-average molecular weight of 309100 and a melting point of 150° C which was lower than the melting point of polypropylene, 161°C and thus it is supposed that the recurring unit represented by the formula [6] was randomly introduced into the polypropylene chain.

### Example 15

In a reaction vessel of 500 ml in internal volume were charged 100 ml of n-heptane, 2.5 mmols of triethylaluminum and 2.5 mmols of diethylaluminum monochloride and further, 1 mmol (in terms of Ti atom) of the solid catalyst component obtained in (1) of Example 1 was added thereto and the temperature was elevated to 50°C.

Then, thereto were added 2.6 g of butene-1 and 7.5 g of the propylene tetramer obtained in the preparation of the olefinic hydrocarbon and copolymerization reaction was effected for 2 hours at 50°C.

After completion of the reaction, the product was washed with a hydrochloric acid-methanol mixed solution to decompose and remove the catalyst component. The residue was dried to obtain 8.39 g (yield: 82.2%) of a copolymer.

The resulting copolymer was further subjected to Soxhlet extraction with diethyl ether as a solvent to obtain 44.3% by weight of an extraction residue.

This extraction residue copolymer had a weight-average molecular weight of 94500.

It was found that the melting point of this copolymer was 97°C, which was lower than the melting point of polybutene-1 homopolymer, 110°C.

### Example 16

Example 15 was repeated except than the amount of butene-1 and that of propylene tetramer fraction used were 7.8 g and 2.5 g, respectively.

The yield of the resulting copolymer was 9.5 g (92.7%).

The amount of extraction residue copolymer obtained using diethyl ether was 84.5% by weight and the weight-average molecular weight thereof was 84700 and melting point was 105°C.

### Example 17

Example 15 was repeated except that 2.8 g of hexene-1 was used in place of 2.6 g of butene-1 and 7.2 g of propylene pentamer fraction was used in place of 7.5 g of propylene tetramer fraction.

The yield of the resulting copolymer was 6.2 g (yield: 62.0%) and the weight-average molecular weight thereof was 26900.

### Example 18

Example 17 was repeated except that the amount of hexene-1 and that of propylene tetramer fraction were 7.9 g and 2.2 g, respectively.

The yield of the resulting copolymer was 8.9 g (88.1%) and the weight-average molecular weight thereof was 42200.

### Example 19

Example 15 was repeated except that a component comprising hexamer and the higher polymers was used in place of the propylene tetramer.

The yield of the resulting copolymer was 7.4 g (73.3%).

The amount of extraction residue copolymer obtained by using diethyl ether was 34.4% by weight and the weight-average molecular weight thereof was 127000 and melting point thereof was 96°C.

### Example 20

Example 17 was repeated except that a mixture of propylene tetramer and the higher polymers was used in place of the propylene pentamer fraction.

The yield of the resulting copolymer was 6.5 g (yield: 65.0%) and the weight-average molecular weight was 31200.

## Claims

1. An olefin polymer which has the recurring unit represented by the following formula [1]: 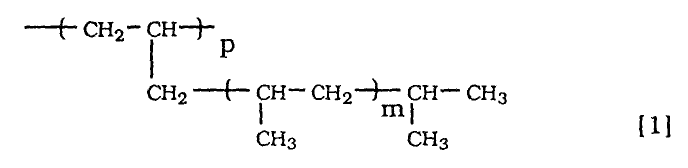 wherein p represents an integer of 2 or more and m represents an integer of at least 1.

2. An olefin copolymer which has the recurring unit represented by the following formula [3]: 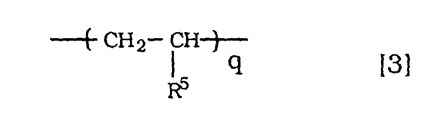 wherein R⁵ represents hydrogen atom or an alkyl group of 1-9 carbon atoms and the recurring unit
represented by the following formula [1] 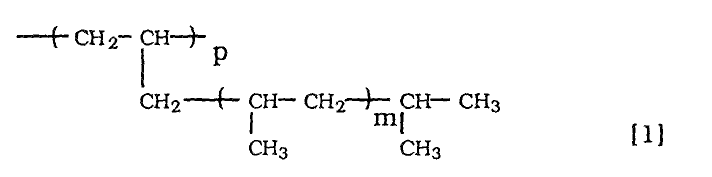 wherein the sum of p + q is a number of 5 or more and m represents an integer of at least 1.

3. An olefin polymer according to claim 1 or 2 wherein m in the formula [1] is 1-3.

4. A process for producing an olefin polymer which comprises polymerizing an olefinic hydrocarbon represented by the following formula [2] 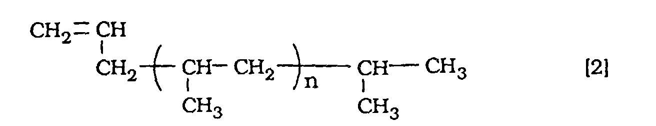 wherein n represents an integer of at least 1,
in the presence of a catalyst mainly composed of a transition metal compound and an organometallic compound of Groups I-V in the periodic table.

5. A process for producing an olefin copolymer which comprises polymerizing an olefinic hydrocarbon represented by the following formula [4]:
CH₂ = CH - R⁵ [4]
wherein R⁵ represents a hydrogen atom or an alkyl group of 1-9 carbon atoms and an olefinic hydrocarbon represented by the following formula [2]: 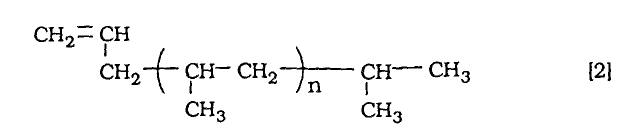 wherein n represents an integer of at least 1,
in the presence of a catalyst mainly composed of a transition metal compound and an organometallic compound of the Groups I-V of the periodic table.

6. A process according to claim 4 or 5 wherein the olefinic hydrocarbon represented by the formula [2] is a propylene oligomer obtained by polymerizing propylene in the presence of a catalyst comprising a condensation product of an organoaluminum compound and water and an alkyl-substituted cyclopentadienyl compound.

7. A process according to claim 6 wherein the organoaluminum compound is a compound represented by the following formula:
AlR¹ ₃
AlR² ₂Y or
Al₂R³ ₃Y₃
wherein R¹, R² and R³ each represents a cycloalkyl group, an aryl group or an alkyl group of 1-10 carbon atoms and Y represents a hydrogen atom, a halogen atom or an alkoxy group.

8. A process according to claim 6 wherein the organoaluminum compound is a trialkylaluminum compound represented by the formula :
AlR⁴ ₃
wherein R⁴ represents an alkyl group of 1-5 carbon atoms.

9. A process according to claim 6 wherein the alkyl-substituted cyclopentadienyl compound is a compound represented by the following formula:
[Rₜ(C₅H₅₋ₜ)]ₛ·M·X₄₋ₛ
wherein R represents an alkyl group of 1-20 carbon atoms, Rₜ(C₅H₅₋ₜ) represents an alkyl-substituted cyclopentadienyl group, t represents an integer of 1-5, M represents a zirconium atom or hafnium atom, X represents a hydrogen atom, an alkyl group of 1-20 carbon atoms or a halogen atom and s represents a real number of 1-4.

10. A process according to claim 6 wherein the organoaluminum compound is trimethylaluminum and the alkyl-substituted cyclopentadienyl compound is bis(pentamethylcyclopentadienyl)hafnium dichloride.

11. A process according to claim 4 or 5 wherein the catalyst mainly composed of the transition metal compound and the organometallic compound of Groups I-V of the periodic table is a Ziegler-Natta catalyst.

12. A process according to claim 4 or 5 wherein the catalyst is prepared from a titanium halide and an organoaluminum compound.

13. A process according to claim 4 or 5 wherein the catalyst is a highly active catalyst prepared from a solid catalyst component obtained by contacting a magnesium alkoxide, an electron donating compound and a titanium halide and an organoaluminum compound.

## Patentansprüche

1. Olefinpolymer mit der wiederkehrenden Einheit der folgenden Formel (1) 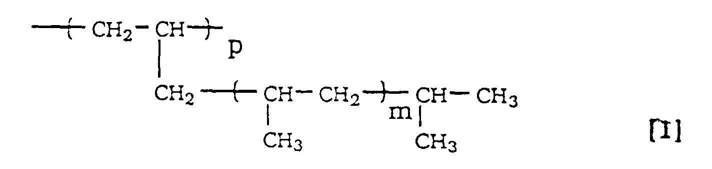 worin p eine ganze Zahl von 2 oder mehr und m eine ganze Zahl von mindestens 1 bedeuten.

2. Olefincopolymer mit der wiederkehrenden Einheit der folgenden Formel (3) 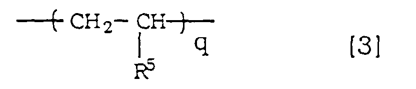 worin R⁵ ein Wasserstoffatom oder eine Alkylgruppe mit 1-9 Kohlenstoffatomen bedeutet, und der wiederkehrenden Einheit der folgenden Formel (1) 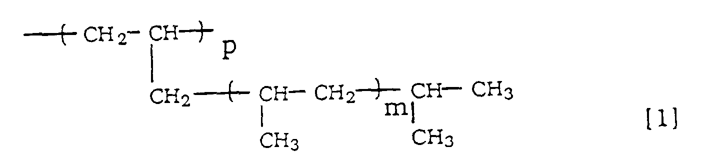 worin die Summe aus p + q eine Zahl von 5 oder mehr ist und m eine ganze Zahl von mindestens 1 bedeutet.

3. Olefinpolymer nach Anspruch 1 oder 2, wobei m in der Formel (1) 1-3 ist.

4. Verfahren zur Herstellung eines Olefinpolymeren, umfassend das Polymerisieren eines olefinischen Kohlenwasserstoffs der folgenden Formel (2) 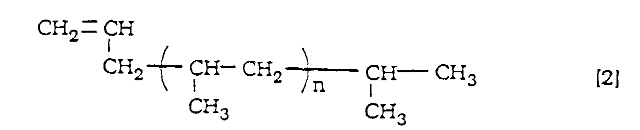 worin n eine ganze Zahl von mindestens 1 bedeutet,
in Gegenwart eines Katalysators, der hauptsächlich aus einer Übergangsmetallverbindung und einer organometallischen Verbindung der Gruppen I-V des Periodensystems aufgebaut ist.

5. Verfahren zur Herstellung eines Olefincopolymeren. umfassend das Polymerisieren eines olefinischen Kohlenwasserstoffs der folgenden Formel (4)
CH₂ = CH - R⁵ (4)
worin R⁵ ein Wasserstoffatom oder eine Alkylgruppe mit 1-9 Kohlenstoffatomen bedeutet, und eines olefinischen Kohlenwasserstoffs der folgenden Formel (2) 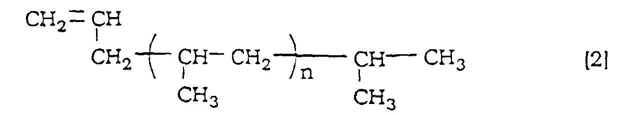 worin n eine ganze Zahl von mindestens 1 bedeutet,
in Gegenwart eines Katalysators, der hauptsächlich aus einer Übergangsmetallverbindung und einer organometallischen Verbindung der Gruppen I-V des Periodensystems aufgebaut ist.

6. Verfahren nach Anspruch 4 oder 5, wobei der durch die Formel (2) angegebene, olefinische Kohlenwasserstoff ein Propylenoligomer ist, das durch Polymerisieren von Propylen in Gegenwart eines Katalysators, umfassend ein Kondensationsprodukt aus einer Organoaluminiumverbindung und Wasser, und einer Alkyl-substituierten Cyclopentadienylverbindung erhalten worden ist.

7. Verfahren nach Anspruch 6, wobei die Organoaluminiumverbindung eine Verbindung der folgenden Formel ist:
AlR¹ ₃
AlR² ₂Y oder
Al₂R³ ₃Y₃
worin R¹, R² und R³ jeweils eine Cycloalkylgruppen, Arylgruppe oder Alkylgruppe mit 1-10 Kohlenstoffatomen bedeuten und Y ein Wasserstoffatom, Halogenatom oder eine Alkoxygruppe bedeutet.

8. Verfahren nach Anspruch 6, wobei die Organoaluminiumverbindung eine Trialkylaluminiumverbindung der Formel:
AlR⁴ ₃
ist, worin R⁴ eine Alkylgruppe mit 1-5 Kohlenstoffatomen bedeutet.

9. Verfahren nach Anspruch 6, wobei die Alkyl-substituierte Cyclopentadienylverbindung eine Verbindung der folgenden Formel:
[Rₜ(C₅H₅₋ₜ)]ₛ·M·X₄₋₂
ist, worin R eine Alkylgruppe mit 1-20 Kohlenstoffatomen ist, Rₜ(C₅H₅₋ₜ) eine Alkyl-substituierte Cyclopentadienylgruppe ist, t eine ganze Zahl von 1-5 ist, M ein Zirkoniumatom oder Hafniumatom ist, X ein Wasserstoffatom, eine Alkylgruppe mit 1-20 Kohlenstoffatomen oder ein Halogenatom bedeutet und s eine reelle Zahl von 1-4 ist.

10. Verfahren nach Anspruch 6, wobei die Organoaluminiumverbindung Trimethylaluminium ist und die Alkyl-substituierte Cyclopentadienylverbindung Bis(pentamethylcyclopentadienyl)hafniumdichlorid ist.

11. Verfahren nach Anspruch 4 oder 5, wobei der hauptsächlich aus der Übergangsmetallverbindung und der organometallischen Verbindung von Gruppen I-V des Periodensystems aufgebaute Katalysator ein Ziegler-Natta-Katalysator ist.

12. Verfahren nach Anspruch 4 oder 5, wobei der Katalysator aus einem Titanhalogenid und einer Organoaluminiumverbindung hergestellt wird.

13. Vefahren nach Anspruch 4 oder 5, wobei der Katalysator ein hochaktiver Katalysator ist, der aus einer festen Katalysatorkomponente hergestellt wird, die erhalten wird durch Kontaktieren eines Magnesiumalkoxids, einer elektronenabgebenden Verbindung und eines Titanhalogenids und einer Organoaluminiumverbindung.

## Revendications

1. Polymère d'oléfine qui possède le motif récurrent représenté par la formule [1] suivante : 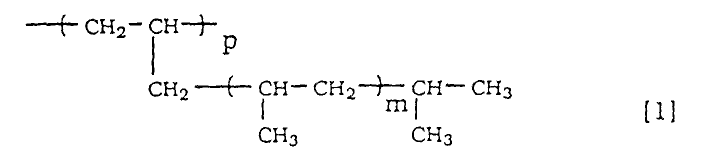 où p représente un nombre entier égal ou supérieur à 2 et m représente un nombre entier valant au moins 1.

2. Copolymère d'oléfines qui possède le motif récurrent représenté par la formule [3] suivante : 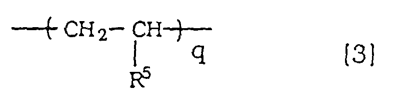 où R⁵ représente un atome d'hydrogène ou un groupe alkyle de 1 à 9 atomes de carbone, et le motif récurrent représenté par la formule [1] suivante 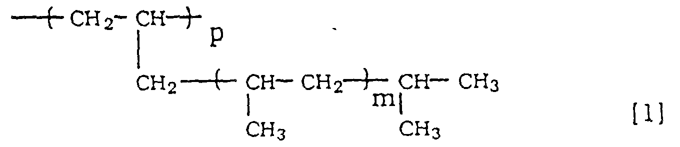 où la somme p + q est un nombre égal ou supérieur à 5 et m représente un nombre entier valant au moins 1.

3. Polyoléfine selon la revendication 1 ou 2, dans laquelle m dans la formule [1] est de 1 à 3.

4. Procédé de production d'un polymère d'oléfine, qui comprend la polymérisation d'un hydrocarbure oléfinique représenté par la formule [2] suivante 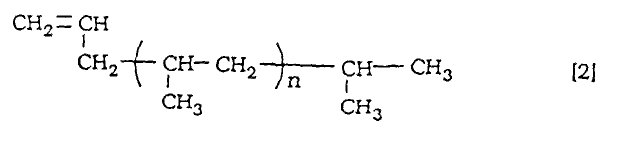 où n représente un nombre entier valant au moins 1, en présence d'un catalyseur constitué principalement d'un composé de métal de transition et d'un composé organométallique de métal des Groupes I à V du Tableau Périodique.

5. Procédé de production d'un copolymère d'oléfines, qui comprend la polymérisation d'un hydrocarbure oléfinique représenté par la formule [4] suivante :
CH₂=CH-R⁵ [4]
où R⁵ représente un atome d'hydrogène ou un groupe alkyle de 1 à 9 atomes de carbone et d'un hydrocarbure oléfinique représenté par la formule [2] suivante : 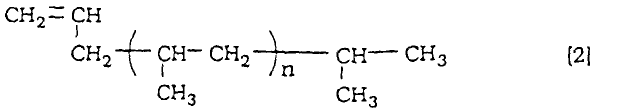 où n représente un nombre entier valant au moins 1, en présence d'un catalyseur constitué principalement d'un composé de métal de transition et d'un composé organométallique de métal des Groupes I à V du Tableau Périodique.

6. Procédé selon la revendication 4 ou 5, dans lequel l'hydrocarbure oléfinique représenté par la formule [2] est un oligomère de propylène obtenu en polymérisant du propylène en présence d'un catalyseur comprenant un produit de condensation d'un composé organométallique d'aluminium et d'eau et un composé de cyclopentadiényle à substitution alkylique.

7. Procédé selon la revendication 6, dans lequel le composé organométallique d'aluminium est un composé représenté par la formule suivante :
AlR¹ ₃
AlR² ₂Y ou
Al₂R³ ₃Y₃
où R¹, R² et R³ représentent chacun un groupe cycloalkyle, un groupe aryle ou un groupe alkyle de 1 à 10 atomes de carbone, et Y représente un atome d'hydrogène, un atome d'halogène ou un groupe alcoxy.

8. Procédé selon la revendication 6, dans lequel le composé organométallique d'aluminium est un trialkylaluminium représenté par la formule :
AlR⁴ ₃
où R⁴ représente un groupe alkyle de 1 à 5 atomes de carbone.

9. Procédé selon la revendication 6, dans lequel le composé de cyclopentadiényle à substitution alkylique est un composé représenté par la formule suivante :
[Rₜ(C₅H₅₋ₜ)]ₛ·M·X₄₋ₛ
où R représente un groupe alkyle de 1 à 20 atomes de carbone et Rₜ(C₅H₅₋ₜ) représente un groupe cyclopentadiényle à substitution alkylique, t représente un nombre entier de 1 à 5, M représente un atome de zirconium ou un atome de hafnium, X représente un atome d'hydrogène, un groupe alkyle de 1 à 20 atomes de carbone ou un atome d'halogène et s représente un nombre réel de 1 à 4.

10. Procédé selon la revendication 6, dans lequel le composé organométallique d'aluminium est le triméthylaluminium et le composé de cyclopentadiényle à substitution alkylique est le dichlorure de bis(pentaméthylcyclopentadiényl)hafnium.

11. Procédé selon la revendication 4 ou 5, dans lequel le catalyseur constitué principalement du composé de métal de transition et du composé organométallique de métal des Groupes I à V du Tableau Périodique est un catalyseur de Ziegler-Natta.

12. Procédé selon la revendication 4 ou 5, dans lequel le catalyseur est préparé à partir d'un halogénure de titane et d'un composé organométallique d'aluminium.

13. Procédé selon la revendication 4 ou 5, dans lequel le catalyseur est un catalyseur très actif préparé à partir d'un composant de catalyseur solide obtenu en mettant en contact un alcoolate de magnésium, un composé donneur d'électrons et un halogénure de titane avec un composé organométallique d'aluminium.
